Europäisches Patentamt

(19) European Patent Office

Office européen des brevets

(11) Publication number: **0 356 367**
**A2**

# (12) EUROPEAN PATENT APPLICATION

(21) Application number: 89500080.0

(22) Date of filing: 12.07.89

(51) Int. Cl.⁵: **A 01 N 1/02**

(30) Priority: 16.08.88 ES 8802547

(43) Date of publication of application:
28.02.90 Bulletin 90/09

(84) Designated Contracting States:
AT BE CH DE ES FR GB GR IT LI NL SE

(71) Applicant: **Grino Boira, José Maria**
**August Font 46, 2n, 2a**
**E-08023 Barcelona (ES)**

(72) Inventor: **Grino Boira, José Maria**
**August Font 46, 2n, 2a**
**E-08023 Barcelona (ES)**

(74) Representative: **Curell Sunol, Jorge et al**
**c/o Dr. Ing. M. Curell Sunol I.I. S.L. Passeig de Gràcia 65 bis**
**E-08008 Barcelona (ES)**

(54) Liquid medium for infusion and preservation of organs.

(57) A liquid medium for infusion and preservation of organs, particularly kidneys, containing mannitol in an amount lying between 3.4 and 4.6 wt%. It preferably includes also sodium allopurinol in an amount lying between 0.025 and 0.1 wt%.

The medium may be used in the preparation and preservation of organs for transplants.

## Description

## LIQUID MEDIUM FOR INFUSION AND PRESERVATION OF ORGANS

The invention relates to a liquid medium for infusion in and preservation of solid organs, such as kidneys, pancreas, livers, hearts and others, being particularly appropriate for infusion in kidney blood vessels and subsequent preservation of kidneys.

As is known, prior to performing a transplant, the organ is removed from the body of the donor. Where the organ is a kidney, it is preserved in an appropriate medium while the future recipient is being prepared. Finally, the organ is implanted in the recipient.

To preserve an organ, particularly in the case of kidneys, the kidney blood vessels are infused at the time of removal. As is generally known, infusion means the artificial circulation in the organ of a liquid medium having a composition appropriate for maintaining the functions of the organ. During the infusion, the liquid medium entrains the blood contained in the blood vessels, particularly the vessels for microcirculation, thereby avoiding the formation of microclots which would occlude the renal capillaries and would make the organ useless for transplant. This operation lasts for about 10 to 15 minutes.

The infused organ is then stored in a sterile container at a temperature of about 4°C such as to be submerged in a liquid having the same composition as the infusing liquid.

The purpose of infusion and the subsequent cold storage is not only to make the organ viable for transplant, but furthermore to get the organ to work immediately it is transplanted. The aim, in the case of kidneys, is to avoid the post-transplant renal insufficiency which, regrettably, is still very frequent in human kidney transplants. Post-transplant oliguric renal insufficiency causes difficulties for the clinical management of the patient, obliges the use of dialysis while the oliguria lasts and makes kidney transplants more expensive, at the same time as there is a poorer prognosis for the functional survival of the graft.

Currently, the liquid infusion medium regularly used in kidney transplant units is a solution proposed by Dr Collins, called "Eurocollins', the ionic composition of which imitates that of the intracellular medium and glucose is used to provide it with an osmolarity similar to that of the intra and extracellular medium.

Nevertheless, the "Eurocollins" liquid medium has the drawback that the glucose diffuses through the cellular membranes, causing intracellular oedema, which is one of the most important factors in the onset of the post-transplant renal insufficiency.

To avoid the above drawback, the present invention proposes a liquid medium characterised in that it includes an amount of mannitol lying between 3.4 and 4.6 wt%, preferably between 4.0 and 4.4 wt%.

In a preferred development of the invention, further to the said amount of mannitol, the liquid medium comprises also an amount of sodium allopurinol lying between 0.025 and 0.1 wt%.

As is known. mannitol is a hexatomic alcohol having the formula $CH_2OH\text{-}(CHOH)_4\text{-}CH_2OH$.

The advantage of mannitol over glucose is that it does not diffuse through the cellular membrane, i.e., it is a good impermeabilising agent, whereby it maintains the tonicity of the extracellular medium and prevents the intracellular oedema mentioned above.

Furthermore, mannitol is a potent scavenger of hydroxyl type free oxygen radicals.

In turn, allopurinol is a potent inhibitor of the enzyme xanthinooxidase, whereby the degradation of the renal uric acid and, therefore, the production of the free oxygen radicals responsable for renal damage during the reinfusion of the organ with blood, particularly if the cold ischaemia exceeds 16 hours duration, is avoided.

Consequently, the liquid medium containing mannitol but not including sodium allopurinol is useful in common clinical practice with regular cold ischaemia times, while the medium containing sodium allopurinol is used preferably with extended cold ischaemia periods.

One example of a composition according to a centesimal formula of the medium of the invention is as follows:

### COMPOSITION 1

| | |
|---|---|
| Mannitol.... | 4.19 g |
| Monopotassium phosphate.... | 0.205 g |
| Dipotassium phosphate... | 0.907 g |
| Potassium chloride.... | 0.112 g |
| Sodium bicarbonate.... | 0.084 g |
| Water, q.s. ad.... | 100 ml |

And an example of a composition, according to a centesimal formula, of a medium according to the invention containing sodium allopurinol is the following:

### COMPOSITION 2

| | |
|---|---|
| Mannitol.... | 4.19 g |
| Monopotassium phosphate.... | 0.205 g |
| Dipotassium phosphate... | 0.907 g |
| Potassium chloride.... | 0.112 g |
| Sodium bicarbonate.... | 0.084 g |
| Sodium allopurinol.... | 0.05 g |
| Water, q.s. ad.... | 100 ml |

With these two new infusion media, no case of oliguric renal insufficiency has been observed in twenty recipients of a kidney from a donor corpse, 10 of the kidneys having been infused with composition 1 and a further 10 with composition 2.

It is noted that the invention does not consist of a method of surgical or therapeutical treatment of the human or animal body, since the medium according to the invention has no properties to cure patients.

It is also noted that the medium according to the invention is not a chemical product, since it is obtained physically, by way of mixtures and solutions.

**Claims**

1.- A liquid medium for infusion and preservation of organs, particularly kidneys, characterised in that it comprises an amount of mannitol lying between 3.4 and 4.6 wt%.

2.- The liquid medium for infusion and preservation of organs of claim 1, characterised in that the amount of mannitol lies between 4.0 and 4.4 wt%.

3.- The liquid medium for infusion and preservation of organs of claim 1, characterised in that it comprises an amount of mannitol lying between 4.0 and 4.4 wt% and an amount of sodium allopurinol lying between 0.025 and 0.1 wt%.

4.- The liquid medium for infusion and preservation of organs of claim 1, characterised in that it comprises an amount of mannitol lying between 3.4 and 4.6 wt% and an amount of sodium allopurinol lying between 0.025 and 0.1 wt%.